# EUROPEAN PATENT APPLICATION

(11) **EP 4 826 503 A1**
(43) Date of publication of application: **21.10.2026**
(21) Application number: 25742082.8
(22) Date of filing: 14.01.2025
(51) Int. Cl.: G06F 3/04842, G06F 3/0488, G06F 3/04845, G06F 3/041, G06F 3/0482, G06F 3/04817, H04N 21/431, H04N 21/472

(54) **ELECTRONIC DEVICE, CONTENT DISPLAY METHOD THEREFOR, AND RECORDING MEDIUM THEREFOR**

(30) Priority: 15.01.2024 KR 20240006078; 05.03.2024 KR 20240031547
(71) Applicant: Samsung Electronics Co., Ltd., Suwon-si, Gyeonggi-do 16677 (KR)
(72) Inventor: NAM, Sungguk, Suwon-si, Gyeonggi-do 16677 (KR); KIM, Moonsoo, Suwon-si, Gyeonggi-do 16677 (KR); MUN, Jihun, Suwon-si, Gyeonggi-do 16677 (KR); YANG, Chulju, Suwon-si, Gyeonggi-do 16677 (KR); YOO, Nagyeom, Suwon-si, Gyeonggi-do 16677 (KR)
(74) Representative: HGF
(86) International application number: PCT/KR2025/000819
(87) International publication number: WO 2025/155067

(57) **Abstract**

An electronic device according to one embodiment may comprise: a touch screen display; a processor; and a memory for storing instructions that can be executed by the processor, wherein the instructions enable the electronic device to: check, from among pieces of content stored in the memory, first artificial intelligence (AI) content in which content is partially generated on the basis of AI; display the first AI content in a first area of the touch screen display on the basis of a request for the display of the first AI content; display thumbnails corresponding to the pieces of content in a second area of the touch screen display; and display an AI indicator for indicating that a partially generated AI object is included in at least one first thumbnail corresponding to the first AI content from among the thumbnails in the second area.

## Description

### [Technical Field]

Various embodiments of the present invention relate to an electronic device, a content display method therefor, and a recording medium therefor.

### [Background Art]

Recently, artificial intelligence (AI) technology is being rapidly developed. In particular, according to evolution of artificial intelligence technology, generative artificial intelligence (generative AI) technology is rapidly growing. The generative artificial intelligence may mean artificial intelligence technology for newly creating similar content on the basis of existing content such as text, audio, and/or image by utilizing machine learning and deep learning technology. For example, the generative artificial intelligence may generate new content on the basis of previously learned data, and may also be applied to an operation for improving quality of an image or editing a video.

The information described above may be provided as the related art for the purpose of enhancing the understanding of the present disclosure. No assertion or determination is made with respect to the applicability of any of the above-mentioned as the prior art related to the present disclosure.

### [Disclosure]

### [Technical Problem]

Meanwhile, AI content (e.g., image, video) generated on the basis of generative artificial intelligence may derive a result generated by artificial intelligence partially rather than an entire area. For example, the AI content in which at least a portion is partially generated may include data including original data and a portion generated by AI.

In a case of AI content (e.g., partial AI content) including data generated by AI in at least a portion, an electronic device represents (e.g., inserts) an AI watermark in a portion of the content for guiding that such is AI content. However, a user may only perceive which content is content generated on the basis of AI through the AI watermark compared to other pieces of content, and it may be difficult to check which portion within the AI content is generated or edited by AI.

Various embodiments intend to propose a method, a device, and a recording medium for displaying partial AI content through thumbnail images (e.g., film strip, thumbnail list) corresponding to pieces of content in displaying AI content generated on the basis of generative AI (e.g., generative AI) on a display (or a touch screen display).

The objects to be achieved by the present disclosure are not limited to the above-mentioned objects but may be variously expanded without departing from the technical teachings and scope of the present disclosure.

### [Technical Solution]

An electronic device according to one embodiment may comprise a touch screen display. The electronic device according to one embodiment may comprise a processor. The electronic device according to one embodiment may comprise a memory for storing instructions executable by the processor. The instructions according to one embodiment may enable the electronic device to receive a user input for displaying at least one AI content including at least one artificial intelligence (AI) object through the touch screen display. The instructions according to one embodiment may enable the electronic device to, on the basis of the user input, display the at least one AI content in a first area of the touch screen display, and display thumbnail images corresponding to the at least one AI content in a second area of the touch screen display. The instructions according to one embodiment may enable the electronic device to display an indicator for indicating the at least one AI object on at least one thumbnail image. The at least one AI content according to one embodiment may be stored in the memory.

A content display method for an electronic device according to one embodiment may comprise receiving a user input for displaying at least one AI content including at least one artificial intelligence (AI) object through a touch screen display. The method according to one embodiment may comprise, on the basis of the user input, displaying the at least one AI content in a first area of the touch screen display, and displaying thumbnail images corresponding to the at least one AI content in a second area of the touch screen display. The method according to one embodiment may comprise displaying an indicator for indicating the at least one AI object on at least one thumbnail image.

A non-transitory computer-readable medium for storing instructions according to one embodiment may comprise instructions for, when executed by a processor of an electronic device, enabling the electronic device to perform receiving a user input for displaying at least one AI content including at least one artificial intelligence (AI) object through a touch screen display. A recording medium (computer-readable medium) according to one embodiment may comprise instructions for performing, on the basis of the user input, displaying the at least one AI content in a first area of the touch screen display, and displaying thumbnail images corresponding to the at least one AI content in a second area of the touch screen display. The recording medium (computer-readable medium) according to one embodiment may comprise instructions for performing displaying an indicator for indicating the at least one AI object on at least one thumbnail image.

An electronic device according to one embodiment may comprise a computer-readable recording medium in which a program for implementing a method for displaying AI-based content is recorded.

### [Advantageous Effects]

An electronic device, a method, and a recording medium according to various embodiments, in displaying AI content on a display (or a touch screen display) on the basis of generative AI (e.g., generative AI), may improve user convenience by allowing to easily check in which portion of the content AI objects generated/edited through AI exist through thumbnails (e.g., thumbnail list, film strip) provided for content searching.

The effects obtained by the present disclosure are not limited to the aforementioned effects, and other effects, which are not mentioned above, will be clearly understood by those skilled in the art to which the present disclosure pertains from the following description.

### [Description of Drawings]

In connection with the description of the drawings, the same or similar reference numerals may be used for the same or similar components (constituent elements).
FIG. 1A is a block diagram of an electronic device within a network environment, according to one embodiment.
FIG. 1B illustrates a generative artificial intelligence (AI) system according to one embodiment.
FIG. 2 illustrates a method for displaying AI content of an electronic device according to one embodiment.
FIGS. 3A and 3B illustrate display screen examples for displaying AI content of an electronic device according to one embodiment.
FIGS. 4A and 4B illustrate display screen examples for displaying AI content of an electronic device according to one embodiment.
FIG. 5 illustrates display screen examples for displaying AI image content of an electronic device according to one embodiment.
FIG. 6 illustrates display screen examples for displaying AI video content of an electronic device according to one embodiment.
FIG. 7 illustrates display screen examples for displaying AI video content of an electronic device according to one embodiment.
FIGS. 8A and 8B illustrate display screen examples for displaying AI content of a foldable electronic device according to one embodiment.

### [Mode for Disclosure]

The electronic device according to embodiments disclosed in this document may be a device of various types. The electronic device may include, for example, a portable communication device (e.g., a smartphone), a computer device, a portable multimedia device, a portable medical device, a camera, a wearable device, or a home appliance. The electronic device according to the embodiment of the present document is not limited to the above-mentioned devices.

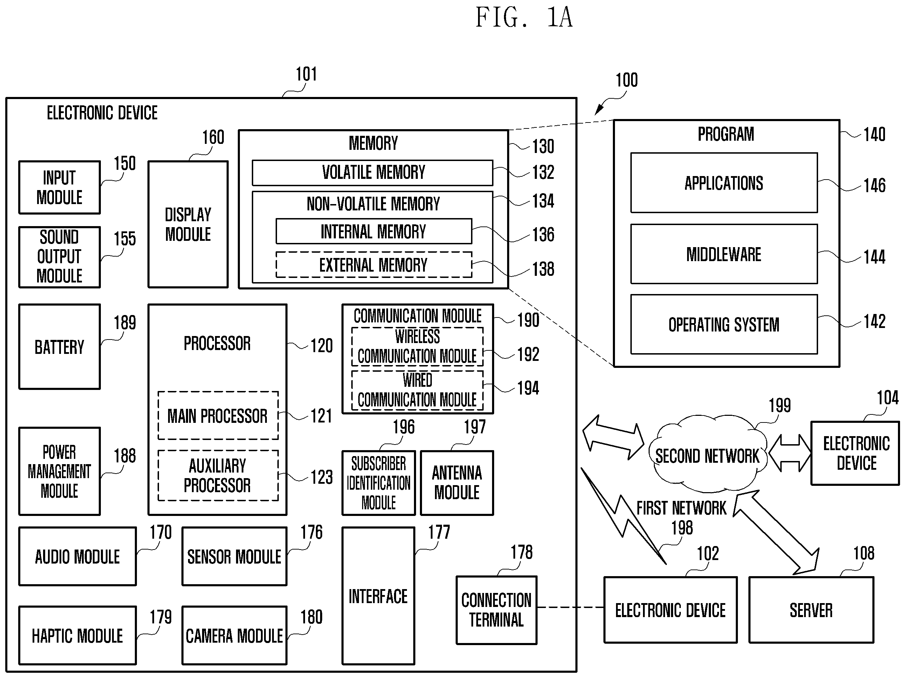

Fig. 1a is a block diagram illustrating an electronic device in a network environment according to various embodiments.

Referring to Fig. 1a, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

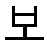 The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device 101 according to one embodiment may support a generative artificial intelligence (AI) / on-device AI function (or AI service). The generative AI function generates new content on the basis of previously learned data, and may mean a technology capable of generating a new form of AI content by utilizing given input data or information. Here, the AI content may mean content (e.g., image, video, audio, or text) entirely generated (or reconstructed/edited) or partially generated (or reconstructed/edited) on the basis of generative AI.

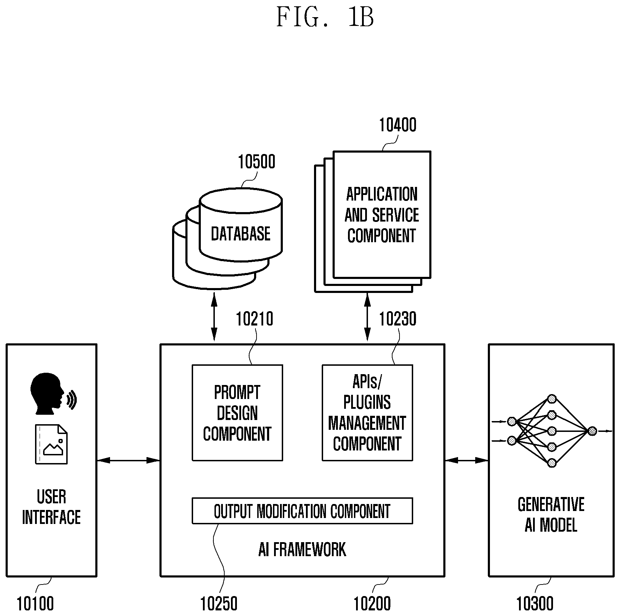

The electronic device 101 according to one embodiment may support a generative AI function (or AI service) in interworking with a server 108. At least one of the electronic device 101 or the server 108 according to one embodiment may include a configuration of a generative AI system illustrated in FIG. 1B.

For example, FIG. 1B illustrates a configuration of a generative AI system according to one embodiment. As illustrated in the FIG. 1B, the generative AI system may include a user interface 1010, an AI framework 1020, a generative AI model 1030, an application and service component 1040, and a database component 1050.

A user interface (e.g., user query/response interface) 1010 according to one embodiment may receive a user query as an input. The user query input may be in a form such as natural language, image, and video. The user interface 1010 may transmit context information as well as data for the user query input to the AI framework 1020. The context information may include various additional information at a user input timing. Also, the user query input may be in a mixed form of the above-described natural language, image, sound, and context information. Also, the user query input may be in a non-natural language form that does not generate natural language, such as menu selection (e.g., generation request or modification request). The user interface 1010 may output a result of the generative artificial intelligence system to a user. The output may be in a natural language form or a specific content form, and may also be provided in a form of an action requested by the user or other forms.

The AI framework 1020 according to one embodiment receives a user query input, and may coordinate and control respective components necessary for performing a user's intention on the basis of the user's query input. Such the AI framework 1020 may include a prompt design component 1021, an application and plugin management component (APIs/Plugins Management component) 1023 , and an output modification component 1025.

A user query or action inputted from the user interface 1010 according to one embodiment may be transmitted to the prompt design component 1021. The prompt design component 1021 may be used in generating a prompt suitable for inputting to a large language model (LLM) or large multimodal models (LMM). The prompt design component 1021 may be an AI component that uses a machine learning algorithm or a neural network to develop a better prompt over time. The prompt design component 1021 generates a prompt by accessing a database component 1050 (e.g., knowledge component) including user preference data, a prompt library, and prompt examples, and may deliver this to the large language model (LLM) or the large multimodal model (LMM).

The application and plugin management component 1023 according to one embodiment may perform a role of communicating with external information in a case where there is a request for additional information when delivering a user input as an input of a generative model. The application and plugin management component 1023 establishes a channel capable of communicating with an outside of the application and service component 1040 (e.g., AI interface) through an application programming interface (API), and through this, enables accessing various data sources. Also, the application and plugin management component 1023 may request a corresponding action through the API in a case where an action for finally performing a user query, rather than an intermediate result, should be performed in an application or a service. Information secured from the outside may be delivered as an input of the generative model together with the user input.

The output modification component 1025 according to one embodiment may finely tune a result outputted from the generative model. For example, the output modification component 1025 may verify whether content generated through the language model (LLM) or the large multimodal model (LMM) is not irrelevant, does not include biased content, or does not include harmful content. Also, the output modification component 1025 determines to what extent a result matches a result desired by the user, and if an additional process is necessary, may proceed with the corresponding process. Additionally, the output modification component 1025 may configure a hint for avoiding an undesired output and provide such to the user.

The generative AI model 1030 according to one embodiment generally means an artificial intelligence neural network that creates a new form of data by depending on user input information. A model for generating an image may representatively include a generative adversarial network (GAN) and a variational auto encoder (VAE). For example, the generative AI model may be a diffusion-based generative model using a VAE and transformer structure. Also, a model for generating a language may mean a model learned to output a statistically most appropriate output value on the basis of an input value. Among the generative AI models 1030, a model for generating a language may be, as an example, a model such as CHAT-GPT 3 and CHAT-GPT 4. As another example, large multimodal models (LMM) may be a model capable of recognizing data inputs of various forms such as text, image, and voice, and generating new data corresponding thereto.

The electronic device 101 according to one embodiment generates AI content or an AI object by using a portion of the AI system of FIG. 1B, and may store the AI content or the AI object generated on the basis of generative AI in the memory 130. The electronic device 101 according to one embodiment requests the server 108 for AI-based generation (e.g., image reconstruction), and may receive AI content generated on the basis of generative AI of the server 108 from the server 108 and store such in the memory 130.

According to one embodiment, the memory 130 may store instructions executable by the processor 120 or the electronic device 101. Such instructions may include a control command such as arithmetic and logic operation, data movement, or input/output that can be processed by the processor 120.

According to one embodiment, the processor 120 may be operatively, functionally, and/or electrically connected with the display module 160 (e.g., touch screen display), and/or the memory 130. The processor 120 is a configuration capable of performing an operation or data processing regarding control and/or communication of respective components of the electronic device 101, and may be formed of one or more processors. There will be no limitation in operation and data processing functions that the processor 120 can implement on the electronic device 201, but in various embodiments of the present disclosure, various operations for displaying AI content may be processed.

The electronic device 101 according to one embodiment may include a touch screen display (e.g., display module 160), the processor 120, and the memory 120 for storing instructions (executable instructions) executable by the processor 120. The instructions according to one embodiment may enable the electronic device 101 or the processor 120 to receive a user input for displaying at least one AI content including at least one artificial intelligence (AI) object through the touch screen display. The instructions according to one embodiment may enable the electronic device 101 or the processor 120 to, on the basis of the user input, display the at least one AI content in a first area of the touch screen display. The instructions according to one embodiment may enable the electronic device 101 or the processor 120 to display thumbnail images corresponding to the at least one AI content in a second area of the touch screen display. The instructions according to one embodiment may enable the electronic device 101 or the processor 120 to display an indicator for indicating the at least one AI object on at least one thumbnail image. The at least one AI content according to one embodiment may be stored in the memory.

The instructions according to one embodiment enable the electronic device 101 or the processor 120 to, on the basis of at least a portion of metadata related to the at least one AI content, generate the indicator corresponding to the at least one AI object, and the indicator may include at least one of a graphic object, a graphic effect, an outline, a highlight, text, an icon, or an image.

The instructions according to one embodiment may enable the electronic device 101 or the processor 120 to display the indicator at a location related to a thumbnail image or at least one AI object included in the at least one AI content.

The at least one AI content according to one embodiment corresponds to video content, and the instructions may enable the electronic device 101 or the processor 120 to receive a second user input related to the thumbnail image through the touch screen display. According to one embodiment, the instructions may enable the electronic device 101 or the processor 120 to, in response to the second user input, display a plurality of frame thumbnail images including a plurality of frames of the at least one AI content in the second area through the touch screen display. The instructions according to one embodiment may enable the electronic device 101 or the processor 120 to display the indicator on at least a portion of the plurality of frame thumbnail images.

The instructions according to one embodiment enable the electronic device 101 or the processor 120 to display the indicator on a first frame thumbnail image including the at least one AI object, and the first frame thumbnail image may be included in the plurality of frame thumbnail images.

The instructions according to one embodiment enable the electronic device 101 or the processor 120 to display a playback bar for indicating a playback location of at least one AI content on the plurality of thumbnail images through the touch screen display, and may enable displaying the indicator at a location related to the playback bar.

The instructions according to one embodiment may enable the electronic device 101 or the processor 120 to display a graphic object related to an AI display setting on the touch screen display. The instructions according to one embodiment may enable the electronic device 101 or the processor 120 to receive a second user input for the graphic object through the touch screen display. According to one embodiment, the instructions may enable the electronic device 101 or the processor 120 to display the indicator on the basis of at least a portion of the second user input.

The instructions according to one embodiment may enable the electronic device 101 or the processor 120 to receive a third user input for displaying at least some information of metadata related to the at least one AI content through the touch screen display. The instructions according to one embodiment may enable the electronic device 101 or the processor 120 to, in response to the third user input, display at least a portion of the metadata at a location adjacent to the thumbnail image.

At least a portion of the metadata according to one embodiment may include information of at least one of an AI engine for generating the at least one AI object, the at least one AI location within the at least one AI content, or a text prompt for commanding to generate the at least one AI object.

The instructions according to one embodiment may enable the electronic device 101 or the processor 120 to, in a case where an entire portion of the at least one AI content corresponds to AI content, display a second indicator different from the indicator for indicating the at least one AI content.

According to one embodiment, a sensor for detecting a folded state of the electronic device is further included, and the instructions may enable the electronic device 101 or the processor 120 to, on the basis of it being determined through the sensor that at least a portion of the electronic device is in a folded state, display a portion of the at least one AI content in the first area through the touch screen display, and display the thumbnail image in the second area. The instructions according to one embodiment may enable the electronic device 101 or the processor 120 to display additional information between the portion of the at least one AI content and the thumbnail image through the touch screen display.

The additional information according to one embodiment may include at least one of a portion of metadata related to the at least one AI content and a reduced image in which another indicator for the at least one AI content is included.

The electronic device 101 according to one embodiment includes a touch screen display, a processor, and a memory for storing instructions executable by the processor, and the instructions enable the electronic device to: check, from among pieces of content stored in the memory, first AI content in which content is partially generated on the basis of artificial intelligence (AI); display the first AI content in a first area of the touch screen display on the basis of a first AI content display request; and display thumbnails corresponding to pieces of content in a second area of the touch screen display, while displaying an AI indicator for indicating that a partially generated AI object is included in at least one first thumbnail corresponding to the first AI content from among the thumbnails within the second area.

In the description of the electronic device 101 according to one embodiments of the present invention disclosed below, the same reference numerals are assigned to components substantially the same as the configuration disclosed in the above-described FIG. 1, and redundant description for the function thereof may be omitted.

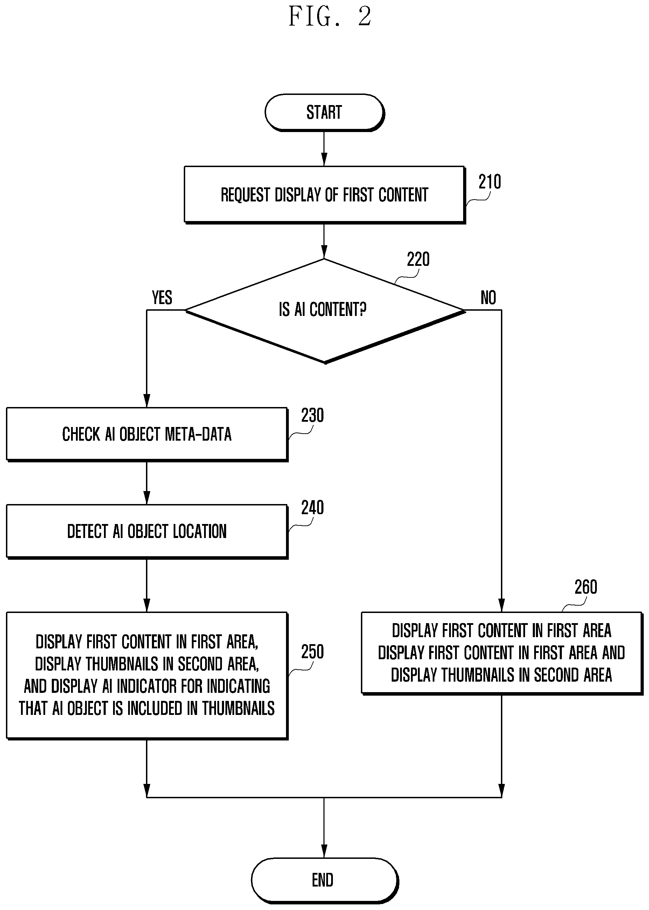

According to one embodiment, each of the embodiments described with reference to FIGS. 2 to 8B may operate independently as one embodiment.

According to one embodiment, at least two embodiments among the embodiments described with reference to FIGS. 2 to 8B may operate in combination.

According to one embodiment, in a case where at least two embodiments operate in combination, at least some configuration and/or at least some operation included in each embodiment may be omitted.

FIG. 2 illustrates a method for displaying AI content of an electronic device according to one embodiment.

In the following embodiment, each operation may be performed sequentially, but is not necessarily performed sequentially. For example, an order of each operation may be changed, and at least two operations may be performed in parallel.

With reference to FIG. 2, the processor 120 of the electronic device 101 according to one embodiment may detect a display request input for first content in operation 210.

For example, the electronic device 101, on the basis of a user request, may detect an input (e.g., display request input for first content) for selecting first content (e.g., first image or first video) from among pieces of content (e.g., image, video) stored in the memory 130 or an external electronic device (e.g., server) by using a gallery application for displaying on a touch screen display. For example, the display request input for first content may be an input for calling a user interface (UI) screen for displaying the first content in a first area, and displaying thumbnails (or thumbnail images, thumbnail list, film strip, hereinafter, referred to as thumbnails) in a second area different from the first area (e.g., a lower end area of the first area).

In operation 220, the processor 120 may check whether AI content generated entirely or partially (at least a portion) on the basis of artificial intelligence (AI) is included from among pieces of content stored in the memory 130.

For example, in a case where information indicating an object generated by using AI is included in metadata from among metadata of content, the processor 120 may identify the corresponding content as AI content.

In operation 230, in a case of including AI content (e.g., yes in operation 220), the processor 120 may check metadata of an AI object stored in relation to the identified AI content.

According to one embodiment, in a case of being AI content, the processor 120 may separately manage or store metadata of an AI object (e.g., object name, object location information, generative AI request prompt information, timestamp) (e.g., second metadata) distinguished from metadata of the content (e.g., generation time, generation location, resolution, file size, file path) (e.g., first metadata).

For example, the metadata of an AI object may store information for each object separately as in the example of the following [Table 1].

**[Table 1]**

| | | | |
|---|---|---|---|
| #1 object | #1 location | #2 object | #2 location |
| #1 prompt | #1 time stamp | #2 prompt | #2 time stamp |
| #3 object | #3 location | #4 object | # 4location |
| #3 prompt | #3 time stamp | #4 prompt | #4 time stamp |

For example, in [Table 1], an object name (e.g., # object) means object information generated by AI, and the object information may include at least one of a name, a shape, a size, and/or a form (or shape) of an object. Prompt information (e.g., # prompt) means request prompt information for causing to generate an object on the basis of generative AI, and may include at least one of a text prompt, a voice prompt, and an image prompt used when generating AI content. Location information (e.g., # location) may mean location information indicating at which location an AI object is displayed within content including the AI object. A time stamp (e.g., # time stamp) may include at least one of a time at which a frame where an AI object is displayed is displayed or a number order of frames.

In operation 240, the processor 120 may detect (or check) an AI object location within AI content.

According to one embodiment, the processor 120 may detect (or check) a location at which an AI object is being displayed within AI content by checking metadata of the AI object.

According to one embodiment, operation 220, operation 230, and operation 240 may operate in real time in the electronic device, or may be performed before operation 210.

In operation 250, in a case where AI content is included, the processor 120 displays first content in a first area (e.g., main area, content display area) of the touch screen display on the basis of a content display request, and displays thumbnails corresponding to pieces of content in a second area (e.g., thumbnail list area, flip strip area, search area) of the touch screen display, while displaying an AI indicator for indicating that a partially generated AI object (hereinafter, partial AI object) is included in at least one first thumbnail identified as AI content from among the thumbnails.

According to one embodiment, when extracting a thumbnail of content in which AI content is included, the processor 120 may also display in the second area (e.g., thumbnail list area, flip strip area, search area) by preferentially selecting (or screening) a thumbnail for a frame in which an AI object is included.

According to one embodiment, the processor 120 may generate an AI indicator (or indicator) on the basis of information (e.g., object type, object location, time, etc.) checked through metadata of an AI object. The AI indicator may include at least one of a graphic object (e.g., visual cue), a graphic effect (e.g., shading effect), an outline (e.g., dotted line or solid line), a highlight, text, an icon, or/and an image.

According to one embodiment, the processor 120 identifies an AI object on the basis of information (e.g., object type, object location, time, etc.) checked through metadata of the AI object, and may check at which location the identified AI object within content, a thumbnail corresponding to the content, or frames constituting the content (e.g., video content) is.

According to one embodiment, the processor 120 may also display an AI indicator on content according to a setting, as well as the thumbnail corresponding to the content.

According to one embodiment, in a case where content is video content, the processor 120 may display an AI indicator for each frame or each frame thumbnail image in a situation of displaying thumbnails (or frame thumbnail images, thumbnail list, film strip) by expanding the video content in units of frames in the second area.

According to one embodiment, the processor 120 may also display AI information for an object in which an object within content is deleted or changed, as well as a partially generated AI object within the content.

According to one embodiment, in a case where first content is a video, the processor 120 may display a playback object indicating that such is video content and a playback bar indicating a playback location in the second area.

In operation 260, in a case where AI content is not included (e.g., no in operation 220), the processor 120 may display first content in a first area (e.g., main area, content display area) of the touch screen display on the basis of a content display request, and may display thumbnails corresponding to pieces of content in a second area (e.g., thumbnail list area, film strip area, search area) of the touch screen display.

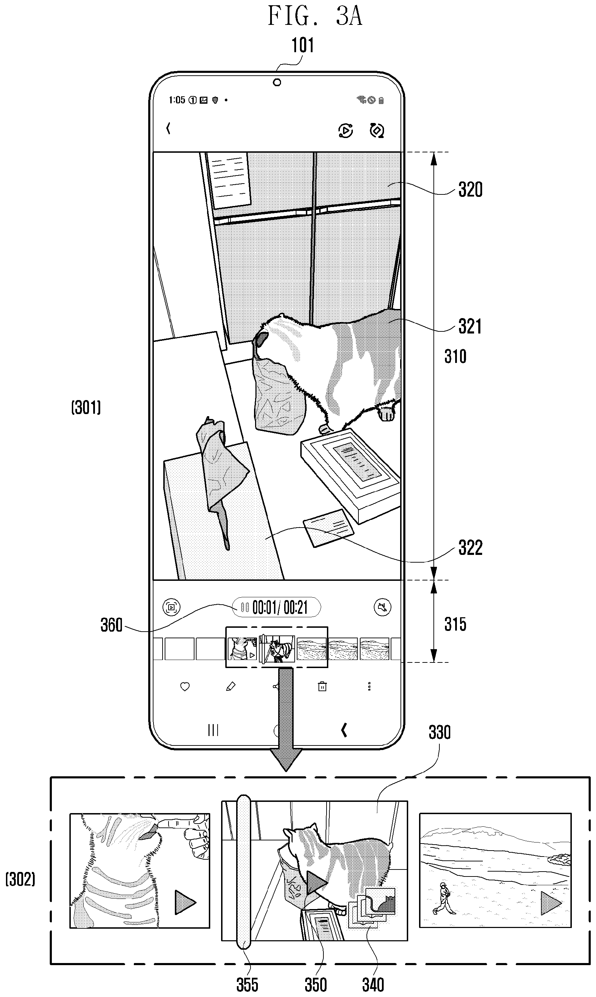

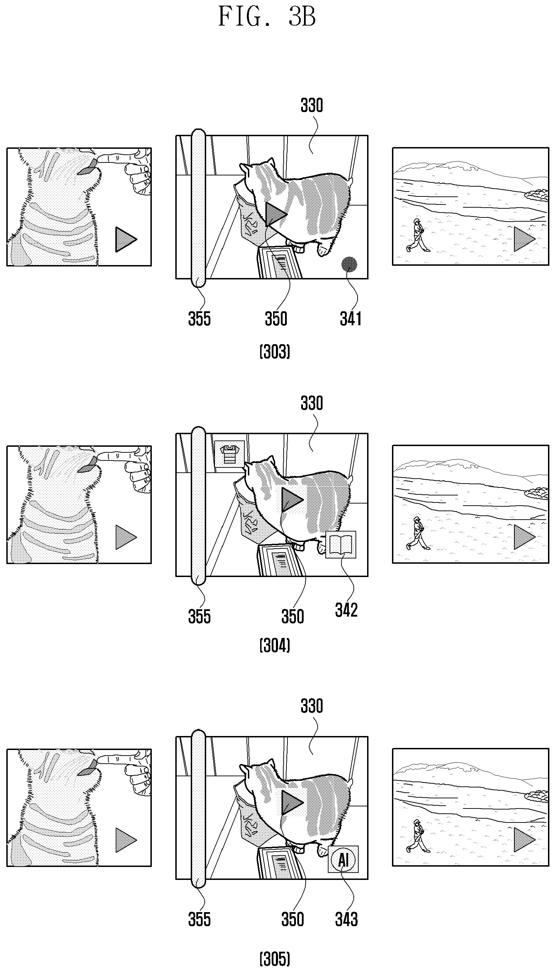

FIGS. 3A and 3B illustrate display screen examples for displaying AI content of an electronic device according to one embodiment.

With reference to FIGS. 3A and 3B, the electronic device 101 according to one embodiment may display one content in a first area 310 of a touch screen display (e.g., display module of FIG. 1), and display thumbnails (or thumbnail images, thumbnail list, film strip) corresponding to pieces of content in a second area 315 (e.g., thumbnail list area, film strip area, search area) provided for content (e.g., image/video) searching, while supporting a function of displaying an AI indicator for indicating that an AI object is included in a thumbnail (or thumbnail image) corresponding to content including the AI object generated entirely or partially by AI.

In examples of FIGS. 3A and 3B, the first area and the second area are illustrated in a separated form, but the present disclosure is not limited thereto, and the second area may be included in at least a partial area of the first area.

According to one embodiment, the electronic device 101, in a situation of displaying a thumbnail corresponding to image content, or displaying a thumbnail corresponding to video content in a reduced version, or a situation of displaying an AI indicator in a reduced version (e.g., a situation where there are multiple AI indicators, or all AI indicators cannot be displayed on a thumbnail), may display at least one AI indicator on a thumbnail corresponding to AI content including an AI object or may display a plurality of AI indicators by overlapping them.

Hereinafter, in <301>, <302>, <303>, <304>, and <305>, description is made as an example where the first content 320 is a video, but embodiments described in FIGS. 3A and 3B may also be applied in a case where the first content 320 is an image.

For example, <301> may be a user interface (UI) screen for displaying the first content 320 (e.g., an image of a first video) in the first area 310, and displaying thumbnails (or thumbnail images, film strip, thumbnail list) in the second area 315. <302> is a drawing expanding a box portion illustrated in <301>, and may be an example where an AI indicator is represented in an icon form. For example, the first content 320 may be content in which a first AI object 321 (e.g., cat object) and a second AI object 322 (e.g., tissue case object) are partially generated on the basis of AI from among objects (e.g., cat, card, tissue case, refrigerator, box) included in the first content 320.

In the example of <302>, since there are multiple AI indicators 340 generated in correspondence to AI objects, a situation may be provided where AI indicators 340 in an icon form are displayed by being overlapped with each other. For example, when displaying a first thumbnail 330 corresponding to the first content 320 in the second area 315, the processor 120 may display AI indicators 340 in an icon form by overlapping them in at least a partial area of the first thumbnail 330. Since AI content corresponds to video content, a playback object 350 and a playback bar 355 are displayed on the first thumbnail 330, and a playback time information object 360 related to the first content 320 may be displayed on the UI screen.

A user may perceive/recognize that content corresponding to the first thumbnail 330 is AI content through the AI indicator 340 in an icon form displayed through the second area.

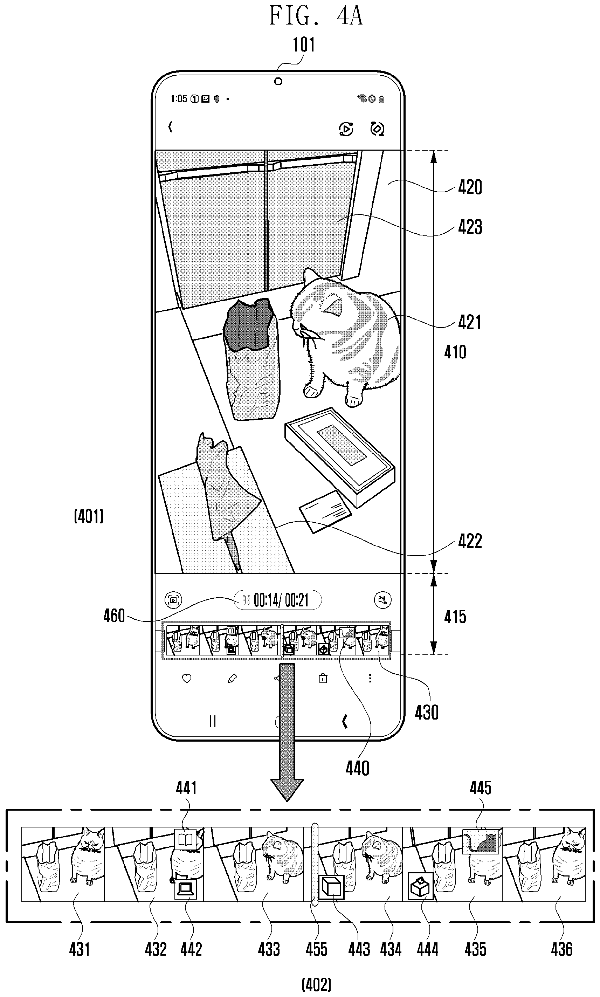

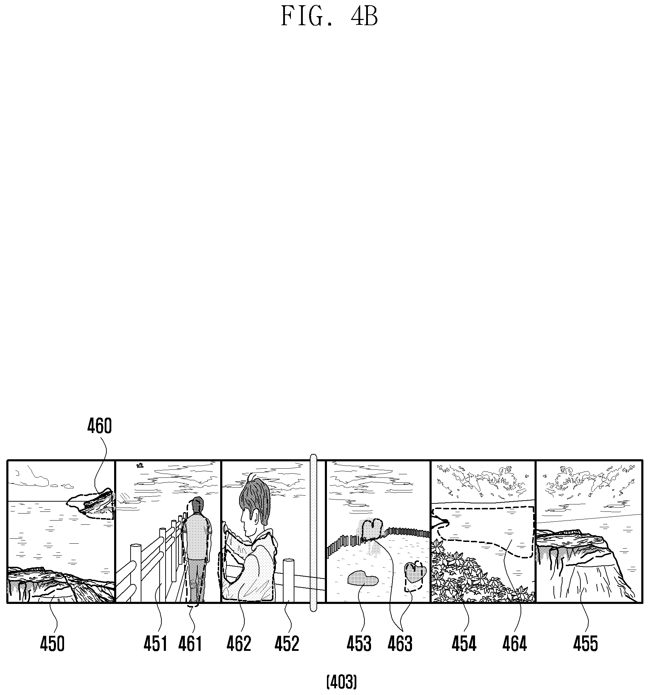

According to one embodiment, the processor 120, on the basis of an input for selecting the first thumbnail 330 displayed in the second area 315 being detected, may display the first thumbnail 330 corresponding to video content in an expanded version in the second area 315, as illustrated in FIG. 4A. The expanded version of the thumbnail (or film strip of a frame unit, frame thumbnail images) will be described in detail in FIGS. 4A and 4B.

The electronic device 101 according to various embodiments may also support a function of displaying an AI indicator in various forms according to a size of a thumbnail displayed in a thumbnail list (or film strip), and a type and a number of generated AI objects.

<303> may be an example where an AI indicator displayed on the first thumbnail 330 is displayed in a form of a visual object 341 (e.g., visual cue). <304>, in a case where there are a plurality of AI indicators in an icon form displayed on the first thumbnail 330, may be an example where icon AI indicators 342 are displayed at various locations so as not to overlap, differently from <302>. <305> may be an example where an AI indicator displayed on the first thumbnail 330 is displayed in a form of an AI watermark 343 (or AI text graphic, image including an AI graphic).

FIGS. 4A and 4B illustrate display screen examples for displaying AI content of an electronic device according to one embodiment.

With reference to FIGS. 4A and 4B, according to one embodiment, in a situation of displaying a thumbnail in an expanded version or a situation of displaying video content in units of frames, the electronic device 101 may display AI indicators at AI object locations generated on the basis of AI for each thumbnail unit or each frame unit.

For example, <401> may be a user interface (UI) screen for displaying the first content 420 (e.g., a still image or playback image of a video) in a first area 310, and displaying frames 430 of the first content in a second area 415. <402> is a drawing expanding a box portion illustrated in <401>, and may be an example where an AI indicator is represented in an icon form, and AI indicators are displayed for each frame unit. For example, the first content 420 may be content in which a first AI object 421 (e.g., cat object), a second AI object 422 (e.g., tissue case), or a third AI object 423 (e.g., refrigerator) is partially generated on the basis of AI from among objects (e.g., desk, cat, card, tissue case, refrigerator, snack case) included in the first content 420.

The electronic device 101, in response to an input for selecting a first thumbnail (e.g., 330 of FIG. 3A) corresponding to a video in a thumbnail list (or film strip), may be expanded and displayed in the second area 415 as frames or frame thumbnail images (e.g., first frame 431, second frame 432, third frame 433, fourth frame 434, fifth frame 435, sixth frame 436) corresponding to the first content 420.

For example, the first content 420 displayed in the example of <401> may be a screen where the fourth frame 434 is being played, and a playback time information object 460 may be displayed.

As illustrated in <402>, AI objects may vary for each frame unit. For example, when the second frame 442 is being played, in a case where a book object (not illustrated) as well as the refrigerator object 423 included in the first content 420 is generated by AI, a situation may be provided where AI indicators of a book icon 441 and a home appliance icon 442 are displayed on the second frame 442. In a case of the fourth frame 434, in a case where a box object (not illustrated) within the first content 420 of the fourth frame 434 is generated by AI, an AI indicator of a box icon 443 may be displayed on a portion where the box object within the fourth frame 434 is displayed. In a case of the fifth frame 435, in a case where the tissue case object 422 and the cat object 421 within the first content 420 of the fifth frame 435 are generated by AI, AI indicators of a case icon 444 and a cat icon 445 may be displayed at locations where the tissue case object 422 and the cat object 421 within the fifth frame 435 are displayed.

Since the AI indicator is displayed by being overlapped on or near an AI object for each frame unit, a user may distinguish (e.g., recognize, perceive) which object within content is an AI object for each frame unit.

The electronic device 101 according to one embodiment, in a case where an AI object is included for each frame unit displayed in the second area 415, may also support a function of identifying AI objects and displaying an outline surrounding at least a portion of the AI objects for each frame unit. For example, <403> may be an example of a situation where expansion display is performed in units of frames in the second area 41 in correspondence to AI video content. For example, an AI video may include a first frame 450, a second frame 451, a third frame 452, a fourth frame 453, a fifth frame 454, and a sixth frame 455. In this case, in the first frame 450, a first object 460 may be a portion generated by AI, in the second frame 451, a second object 461 may be a portion generated by AI, and in the third frame 452, a third object 462 may be a portion generated by AI. In the fourth frame 453, a fourth object 463 may be a portion generated by AI, and in the fifth frame 454, a fifth object 464 may be a portion generated by AI. In a case of the sixth frame 455, the sixth frame may be a frame where there is no object generated by AI.

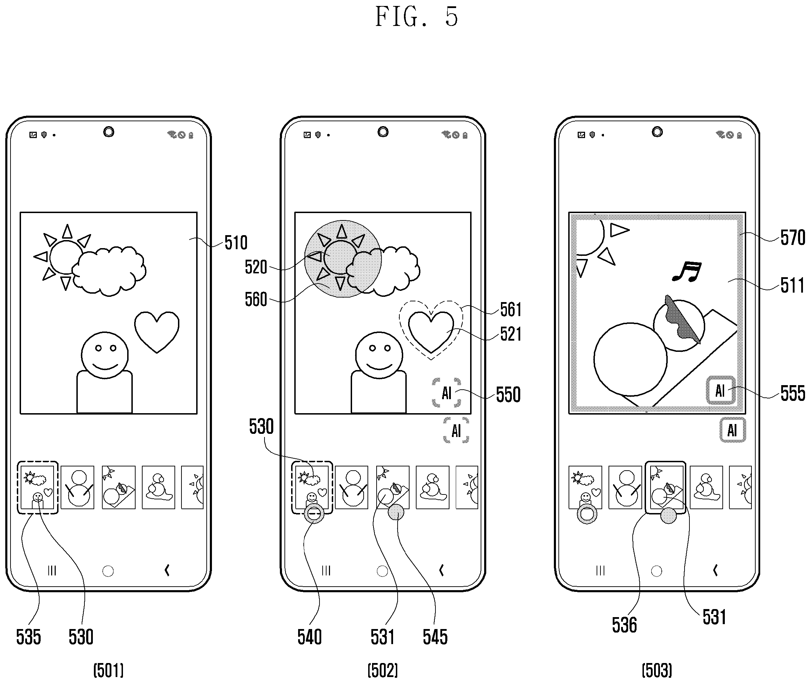

FIG. 5 illustrates display screen examples for displaying AI image content of an electronic device according to one embodiment.

With reference to FIG. 5, the electronic device 101 according to one embodiment may support a display function and a display deactivation function of an AI indicator. For example, the electronic device 101 may provide a setting item (not illustrated) related to AI indicator display on a touch screen display. A user may set display or display deactivation of an AI indicator through the setting item.

The electronic device 101 according to one embodiment not only displays an AI indicator within thumbnails (or thumbnail images, thumbnail list, film strip), but may also support a function of displaying an AI indicator indicating that such is a partially generated AI object on content or displaying an AI indicator (or graphic effect) indicating that such is entirely AI content.

According to one embodiment, the electronic device 101 may display AI content (e.g., the first image 510) and thumbnails (or thumbnail images, thumbnail list, film strip) for searching on a touch screen display (e.g., display module of FIG. 1) on the basis of a content display request input. <501> may be a first UI screen (or UI screen) in a situation where the AI indicator is set to display deactivation. For example, the first UI screen may be a situation where a first thumbnail 530 is selected by a user from among thumbnails, and the first image 510 corresponding to the first thumbnail 530 is displayed on a display. In this case, a visual effect (e.g., dotted line border 535) may be displayed so that the first thumbnail 530 selected by the user is distinguished from other thumbnails. The user may change (or switch) content (e.g., image) displayed on the touch screen display by dragging the thumbnails left and right or selecting another thumbnail.

According to one embodiment, the electronic device 101 may control to display a size of the first thumbnail 530 in which an AI object is included larger than other thumbnails in which an AI object is not included.

In a case where the user changes to an AI indicator display setting through the setting item, the electronic device 101 may be switched to a second UI screen for displaying an AI indicator, as illustrated in <502>. For example, the electronic device 101 checks that a sun object 520 and a heart object 521 within the first image 510 are objects/areas partially generated on the basis of AI on the basis of metadata of an AI object, and may display AI indicators such as displaying a shading effect 560 on the sun object 521 included in the first image 510 or displaying a dotted line 561 along an outline on the heart object 520. In <502>, the AI indicator is illustrated as an outline display and a shading effect, but the present disclosure is not limited to the visual effect illustrated in <502>.

As illustrated in <502>, the electronic device may display a first AI mark 550 indicating that the first image is an image including an object partially generated within the first image on the second UI screen, or may also display an AI mark 550 of a first type at at least a portion of a lower end outside an area for displaying the first image. According to a setting, only one of the two areas may be displayed for the AI mark 550.

According to one embodiment, the electronic device 101, in a case of thumbnails for searching, may provide a visual effect of a thumbnail differently so that an image in which an AI object is partially generated from among images is visually distinguished from an image in which an entire image is generated by AI. For example, as illustrated in <502>, the electronic device 101 may be a case where the first thumbnail 530 corresponding to the first image 510 is an image where an image is partially generated, and a second thumbnail 531 corresponding to a second image 511 is an image where an image is entirely generated. In a case of the first thumbnail 530 corresponding to the first image 510 which is partially generated, the electronic device 101 may display an AI pointer object 540 of a first type, and in a case of the second thumbnail 531, may display an AI pointer object 545 of a second type.

Although not illustrated in the drawing, the electronic device 101 may also display an AI indicator on at least a portion (e.g., a partially generated AI object (e.g., sun object, heart object)) of the first thumbnail 530 instead of the AI pointer object 540 of the first type according to a setting.

According to one embodiment, in a case where the user selects an AI indicator area or an AI object area (e.g., sun object 520, heart object 521) displayed on the first image 510 or detects a hovering input on an AI object, the electronic device 101 may also display related AI information (e.g., metadata of the AI object or text or image informing that such is an AI object) for the selected AI object in a pop-up form.

<503> may be a third UI screen where the user selects the second thumbnail 531 in a thumbnail list (e.g., film strip) and the second image 511 corresponding to the second thumbnail 531 is displayed. The second image 511 is an image in which an entire image is generated by AI, and in order to indicate that the entire image is AI, an entire image border portion may be displayed as a highlight 570. The electronic device 101 may display an AI mark 555 of a second type indicating that such is an image in which an entire image is generated on the basis of AI at at least a partial area of the second image 511, or may display an AI mark 555 of a second type at at least a portion of a lower end outside an area for displaying the second image 511. The electronic device 101 may display an AI pointer object 545 of a second type indicating that an entire image is generated on the basis of AI on the second thumbnail 531 selected on the third UI screen. In this case, a visual effect (e.g., solid line border 536) may be displayed so that the second thumbnail 531 selected by the user is distinguished from other thumbnails.

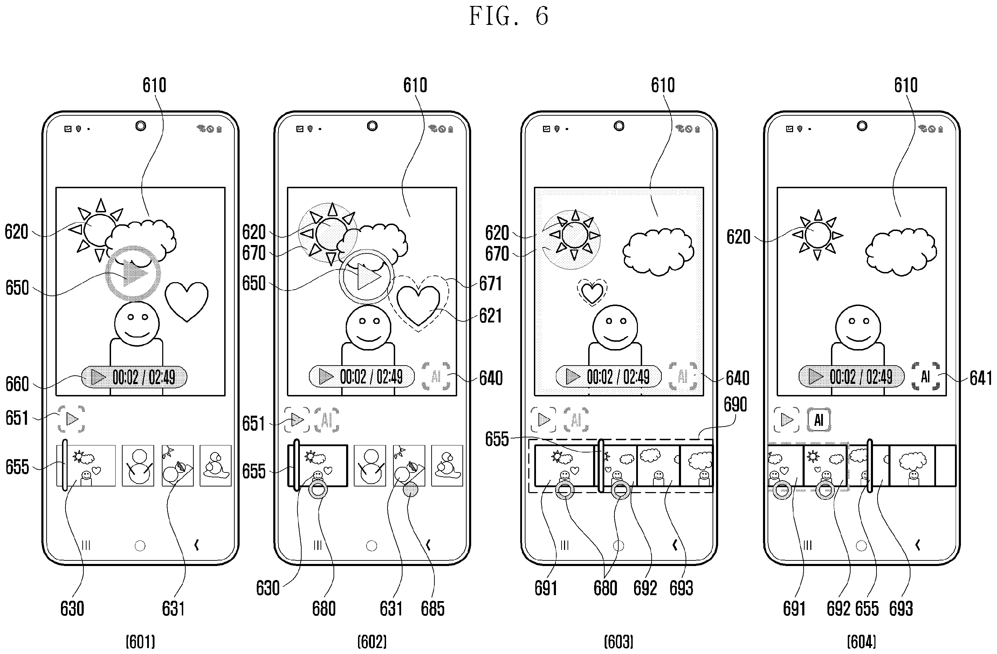

FIG. 6 illustrates display screen examples for displaying AI video content of an electronic device according to one embodiment.

With reference to FIG. 6, the electronic device 101 according to one embodiment may support a function of displaying an AI indicator also for AI content in which a portion within a video is generated by AI.

The electronic device 101 may display a first video 610 in at least a portion (e.g., first area) of a touch screen display (e.g., display module 160 of FIG. 1) on the basis of a user input for selecting a first thumbnail 630 (or first thumbnail image) corresponding to the first video 610 including partial AI information in a thumbnail list (e.g., second area).

The electronic device 101 according to one embodiment, in a case of video content, may display a playback object 650 and/or a playback bar 655 for guiding that such is video content, or display, differently from image content, a playback time information object 660 indicating a playback time of a video on at least a portion of the touch screen display. The electronic device 101 may display a separate playback object 651 at at least a partial area of a lower end of content according to a setting.

The electronic device 101 according to one embodiment removes the playback object 650 displayed on video content on the basis of a user input for selecting the playback object 650 displayed on the video content, plays the video content, and may switch to expand and display the thumbnail list in units of frames constituting the video.

The electronic device 101 according to one embodiment may display a size of the first thumbnail 630 corresponding to video content smaller or larger than a second thumbnail 631 corresponding to image content in the thumbnail list.

<601> may be a first UI screen (or UI screen) in a situation where the AI indicator is set to display deactivation. For example, the first UI screen may be an example where the first video 610 of a still image is displayed, and a thumbnail list including the first thumbnail 630 corresponding to the first video 610 and second thumbnails 631 corresponding to images is displayed. In a case of <601>, a situation may be provided where the first thumbnail 630 is displayed in a size larger than the second thumbnail 631, and the playback bar 655 is displayed on the first thumbnail 630. Although not illustrated in the drawing, the electronic device 101 may also display a visual effect (e.g., border emphasis effect (not illustrated)) so that the first thumbnail 630 selected by the user is distinguished from other thumbnails.

In a case where the user changes to an AI indicator display setting through the setting item, the electronic device 101 may be switched to a second UI screen for displaying an AI indicator, as illustrated in <602>. When switched from the first UI screen to the second UI screen, the electronic device 101 may display an AI indicator at an area where an AI object is located within the first video 610. For example, the electronic device 101 displays AI indicators, such as displaying a shading effect 670 and/or an outline 671, at areas/locations where a sun object 620 and a heart object 621 generated by AI are displayed in the first video 610, and may display an AI mark 641 of a first type indicating that the first video 610 is a video partially generated at at least a portion within the first video 610 or at a lower end area of the first video 610, or may also display the AI mark 641 of a first type at at least a portion of a lower end outside an area for displaying the first video 610. Upon switching to the second UI screen, the electronic device 101 displays an AI pointer object 680 of a first type in a case of the first thumbnail 630 corresponding to AI content (e.g., the first video 610) in which at least a portion of content is partially generated in the thumbnail list, and may display an AI pointer object 685 of a second type in a case of the second thumbnail 631 corresponding to AI content in which an entire content is generated.

The electronic device 101 may guide a user that a portion to which AI is applied exists by displaying the playback object 650, the playback time information object 660 displayed on the first video 610 within the second UI screen, and the playback bar 655 displayed on the first thumbnail 630 with different visual effects (e.g., color, size, contrast, etc.) so as to be distinguished from the first UI screen of <601> according to a setting.

As illustrated in <603>, a third UI screen may be provided where the electronic device 101 expands and displays the thumbnail list into a list of a frame unit (or frame list 690) constituting the first video 610 on the basis of a user input for selecting the first thumbnail 630 or selecting the playback object 650 for playing the first video 610. The frame list 690 may include, for example, a first frame 691, a second frame 692, a third frame 693, a fourth frame, and an N-th frame, and a frame number or a frame order displayed in the frame list may be changed according to a playback time of the first video 610.

On the third UI screen, when the first video 610 is being played, a playback time of the playback time information object 660 is changed according to playback progress, and a frame location of the playback bar 655 may be changed.

The electronic device 101 according to one embodiment, upon video playback, identifies whether an AI object exists in units of frames constituting a video on the basis of metadata of the AI object, and may display an AI indicator for each frame in which an AI object is partially included. For example, in the example of <603>, since an object partially generated by AI is included in the first frame 691 and the second frame 692, an AI pointer object 680 of a first type may be displayed respectively. Since the third frame 693 is a frame in which an AI object generated by AI is not included, an AI indicator may not be displayed.

Also, the second UI screen of <602> is a situation where the first video 610 corresponding to the first frame 691 and AI indicators (e.g., shading effect 670 and/or outline 671) corresponding to AI objects (e.g., sun object 620 and heart object 621) included in the first video 610 are displayed, and the third UI screen of <603> may be a situation where the first video 610 corresponding to the second frame 692 and AI indicators corresponding to AI objects included in the first video 610 are displayed.

According to one embodiment, when the first video 610 is played, the electronic device 101 may also control so that a portion where a frame including an AI object is played is played at a playback speed slower than a normal speed.

According to one embodiment, when a user scrolls (or swipes) the playback bar 655 in the frame list 690, the electronic device 101 may control so that when the playback bar 655 is located on a frame area including an AI object, a scrolling speed or a swipe speed is played at a speed slower than a normal speed.

<604> may be a fourth UI screen in a situation where the first video 610 of the third frame 693 in which an AI object is not included is being played. The electronic device 101 may display by changing display characteristics (e.g., color, visual effect, dotted line, contrast) of the fourth UI screen, differently from a case where frames including an AI object (e.g., the first frame 691, the second frame 692) are played. For example, the electronic device 101 may apply sizes or colors of AI marks 640, 641 and the playback bar 655 differently. In this case, since the first video 610 corresponding to the third frame 693 does not include an AI object, an AI indicator may not be displayed.

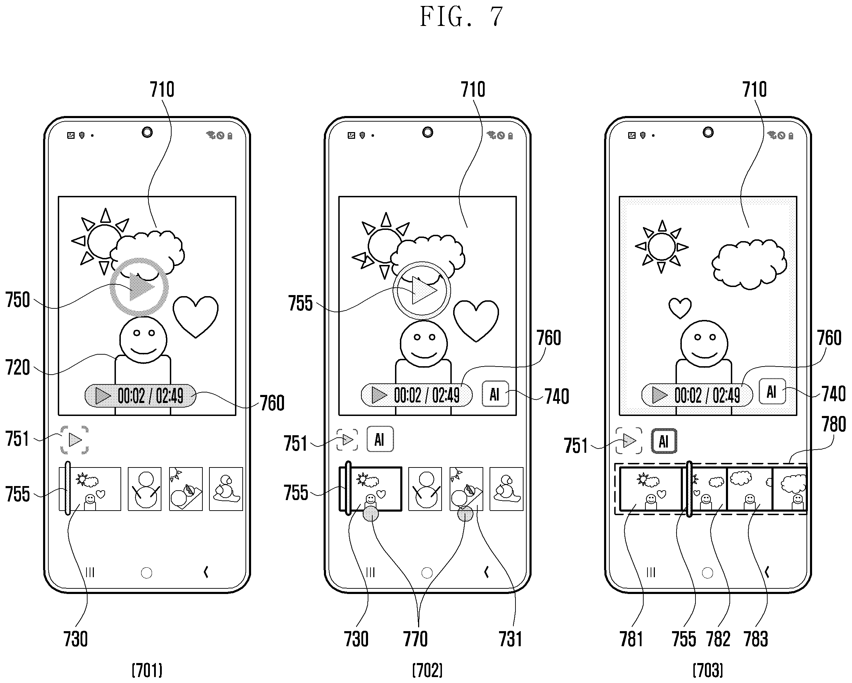

FIG. 7 illustrates display screen examples for displaying AI video content of an electronic device according to one embodiment.

With reference to FIG. 7, the electronic device 101 according to one embodiment may support a function of displaying an AI indicator also for AI content in which an entire video is generated by AI. The embodiment of FIG. 7, differently from FIG. 6, is only a situation where an entire video is AI content generated by AI, and a function or/and a configuration applied to the UI screen described in FIG. 6 may also be applied to FIG. 7.

<701> may be a first UI screen (or UI screen) in a situation where the AI indicator is set to display deactivation. On the first UI screen, the first video 710 of a still image corresponding to a first thumbnail 730 is displayed, and a thumbnail list corresponding to pieces of content is displayed, but the first video 710 may be AI content in which an entire video is generated by AI, differently from <601>. In a case of <701>, as described in FIG. 6, playback objects 750 and 751, a playback time information object 760, and a playback bar 755 related to video content may be displayed.

In a case where the user changes to an AI indicator display setting through the setting item, the electronic device 101 may be switched to a second UI screen for displaying an AI indicator 770, as illustrated in <702>. When switched from the first UI screen to the second UI screen, the electronic device 101 displays an AI mark 740 of a second type indicating that the entire image is an image generated on the basis of AI, or, in the thumbnail list, may display an AI pointer object 770 of a second type indicating that the entire image is generated, on a first thumbnail 730 (or a second thumbnail 731) corresponding to AI content in which the entire image is generated. The electronic device 101 may visually distinguishably change display characteristics or visual effects (e.g., color, size, contrast, solid line display) of the playback objects 750 and 751, the playback bar 755, and the playback time information object 760 included in the second UI screen from the first UI screen according to a setting.

The electronic device 101, on the basis of a user input for selecting the first thumbnail 70 or selecting the playback object 750 for playing the first video 70, may switch to a third UI screen for expanding and displaying the thumbnail list into a list of a frame unit (or frame list 780) (or frame thumbnail images) constituting the first video 610, as illustrated in <703>. The frame list 780 may include a first frame 781, a second frame 782, a third frame 783, and an N-th frame, and a location of the playback bar 755 may be changed according to a playback time.

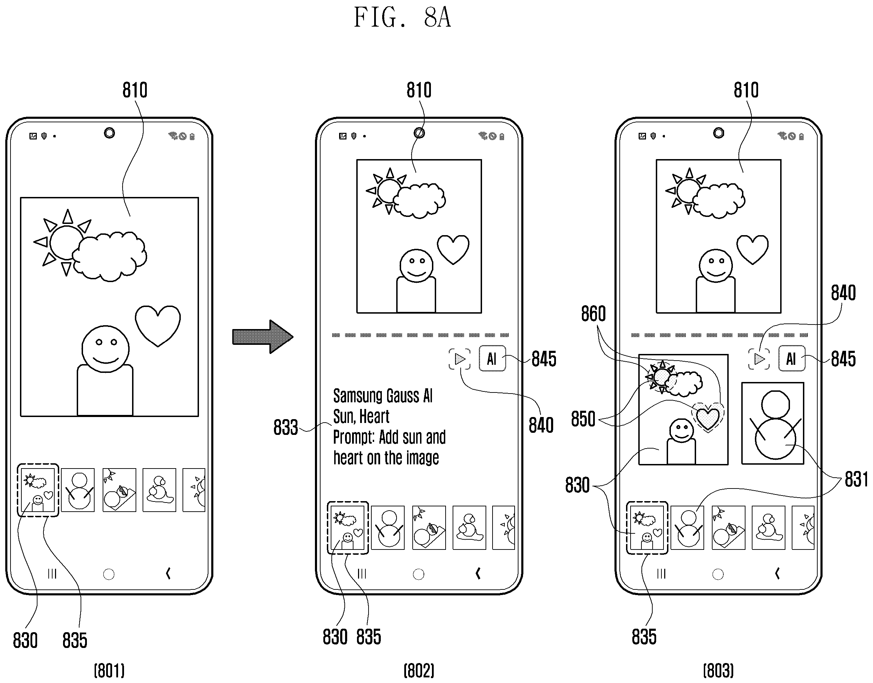

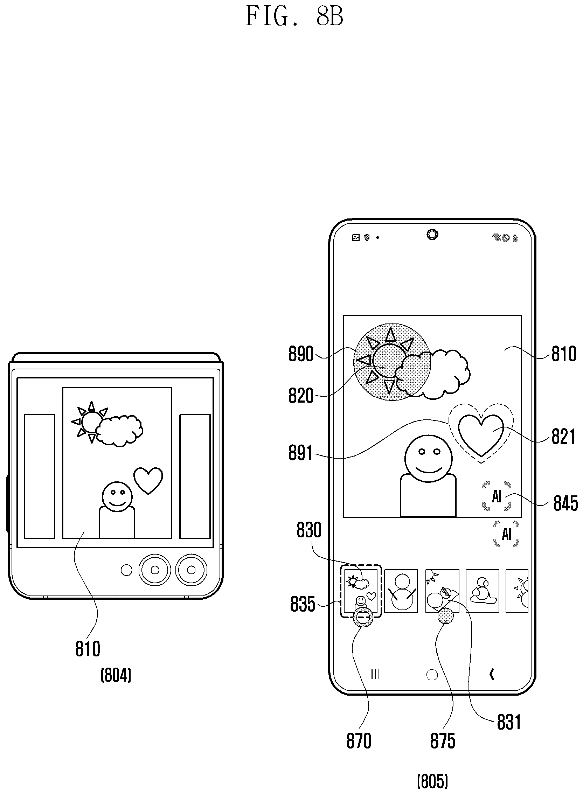

FIGS. 8A and 8B illustrate display screen examples for displaying AI content of a foldable electronic device according to one embodiment.

With reference to FIGS. 8A and 8B, according to one embodiment, the electronic device 101 may support a function of applying a display function of information related to AI differently on the basis of a structure change or a state change of the electronic device. The electronic device 101 illustrated in FIGS. 8A and 8B illustrates a foldable electronic device as an example, but the present disclosure is not limited thereto.

<801> is a first UI screen when the foldable electronic device is in an opened state (or unfolded state), and may be an example where a first image 810 corresponding to a first thumbnail 830 is displayed on at least a portion of a touch screen display (e.g., first display) on the basis of the first thumbnail 830 (or first thumbnail image) being selected by a user input in a thumbnail list or thumbnail images. The first thumbnail 830 may be in a state where a visual effect (e.g., dotted line border 835) is displayed so as to be distinguished from other thumbnails.

In a case where the foldable electronic device is changed to an intermediate state (e.g., a folding angle is 70 to 110 degrees), the foldable electronic device may switch to a second UI screen as illustrated in <802> or <803>. For example, in the example of <802>, a control may be exercised to display text information 833 related to AI content in a touch screen display area between the thumbnail list and the first image 810. The text information may include a portion of information (e.g., AI engine information, AI object information, AI prompt information) stored in metadata of an AI object. On the second UI screen, a playback object 840 indicating that the first image is video content and/or an AI mark 845 indicating that the first image 810 is AI content may also be displayed. For another example, in the example of <803>, a transition may be made to a screen for displaying a thumbnail 850 (and a thumbnail 831 of a next order) to which an AI indicator 860 is applied on an AI object 850 in correspondence to the first image 810, in a touch screen display area between the thumbnail list and the first image 810. Also, in a case of the second UI screens, AI information may be displayed or may not be displayed in the thumbnail list according to a setting.

<804>, in a case where the foldable electronic device is switched to a closed state (or folded state), may be a situation where the first image 810 is displayed on an external display (e.g., second display) of the foldable electronic device. In this case, the first image may be AI content generated on the basis of AI, but information related to AI may not be displayed.

According to one embodiment, the foldable electronic device may display indicators related to AI on the first image displayed on the external display in the folded state, or may display a thumbnail related to the first image and display an AI indicator on the corresponding thumbnail, like the operations described above. Since screen sizes of the external display and the main display are different, the UI for displaying the AI indicator may be provided differently for the first display and the second display.

In a case of detecting that the foldable electronic device is switched from the closed state to the opened state, the foldable electronic device may be switched to a third UI screen where the first image is displayed on the touch screen display, and a thumbnail list (or film strip) is displayed at a lower end of the first image, as illustrated in <805>. In this case, the first thumbnail 830 corresponding to the first image 810 may be in a state where a visual effect (e.g., dotted line border 835) is displayed so as to be distinguished from other thumbnails. On the third UI screen, an AI indicator or information associated with AI may be displayed on the basis of AI metadata related to the first image 810. For example, AI indicators such as a contrast effect 890 and an outline 891 may be displayed at AI objects 820 and 821 and AI object locations included in the first image 810, or an AI mark 845 indicating that the first image 810 is AI content may be displayed. As for the thumbnail list as well, an AI pointer object 870 of a first type is displayed on a partial AI thumbnail (e.g., the first thumbnail 830) generated on the basis of AI, and an AI pointer object 875 of a second type may be displayed on an entire AI thumbnail (e.g., the second thumbnail 831).

Although not illustrated in the drawing, contents described in the present disclosure may be applied not only to the foldable electronic device but also to a rollable electronic device capable of a structure change of a display, and in a case where a display area is increased according to a display structure change, AI-related information displayed within the UI screen in relation to AI may be increased or a size of an AI indicator may be increased.

Various embodiments of the present document and the terms used in the embodiments are not intended to limit the technical features disclosed in the present document to the particular embodiments and should be understood as including various alterations, equivalents, or alternatives of the corresponding embodiments. In connection with the description of the drawings, the similar reference numerals may be used for the similar or relevant constituent elements. The singular form of a noun corresponding to an item may include one or plurality of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st" and "2nd," or "first" and "second" may be used to simply distinguish a corresponding constituent element from another, and does not limit the constituent elements in other aspect (e.g., importance or order). When a constituent element (e.g., a first constituent element) is referred to, with or without the term "operatively" or "communicatively," as "coupled with," "coupled to," "connected with," or "connected to" another constituent element (e.g., a second constituent element), it means that the constituent element may be coupled with the other constituent element directly (e.g., wiredly), wirelessly, or via a third constituent element.

The term "module" used in the embodiments of the present document may include a unit implemented in hardware, software, or firmware, and may interchangeably be used with other terms, for example, "logic," "logic block," "part," or "circuitry". The module may be a single integral component (i.e., part), or a minimum unit or portion thereof, adapted to perform one or more functions. For example, according to one embodiment, the module may be implemented in a form of an application-specific integrated circuit (ASIC).

The embodiments as set forth herein may be implemented as software (e.g., program 140) including one or more instructions that are stored in a storage medium (e.g., internal memory 136 or external memory 138) that is readable by a machine (e.g., electronic device 101). For example, the processor (e.g., processor 120) of the machine (e.g., electronic device 101) may invoke and execute at least one of one or more instructions stored from the storage medium. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, the methods according to the embodiments disclosed in this document may be included in and provided as a computer program product. The computer program product may be traded as a product between a seller and a buyer. The computer program product may be distributed in the form of a machine-readable storage medium (e.g., compact disc read only memory (CD-ROM)), or it may be distributed online (e.g., downloaded or uploaded) through an application store (e.g., Play Store^{™}) or directly between two user devices (e.g., smartphones). In case of the distribution online, at least part of the computer program product may be temporarily generated or at least temporarily stored in the machine-readable storage medium, such as memory of the manufacturer's server, a server of the application store, or a relay server.

According to the embodiments, each constituent element (e.g., module or program), among the above-mentioned constituent elements, may include a single object or a plurality of objects, and some of the plurality of objects may be disposed separately in different constituent elements. According to the embodiments, one or more constituent elements, among the above-mentioned constituent elements, or operations may be omitted, or one or more other constituent elements or operations may be added. Alternatively or additionally, a plurality of constituent elements (e.g., modules or programs) may be integrated into a single constituent element. In this case, the integrated constituent element may perform one or more functions of each of the plurality of constituent elements in the same or similar manner as they are performed by a corresponding one of the plurality of constituent elements before the integration. According to the embodiments, operations performed by the module, the program, or another constituent element may be carried out sequentially, in parallel, repeatedly, or heuristically, or one or more of the operations may be executed in a different order or omitted, or one or more other operations may be added.

## Claims

1. An electronic device, comprising:
a display;
a processor; and
a memory for storing instructions executable by the processor,
wherein the instructions enable the electronic device to:
receive a user input for displaying AI content comprising at least one artificial intelligence (AI) object;
display the at least one AI content in a first area of the display on the basis of the user input;
display thumbnail images corresponding to the AI content in a second area of the display; and
display an indicator for indicating the at least one AI object on at least one thumbnail image displayed in the second area, and
wherein the AI content is stored in the memory.

2. The electronic device of claim 1, wherein the instructions enable the electronic device to generate the indicator corresponding to the at least one AI object on the basis of at least a portion of metadata related to the AI content, and
wherein the indicator comprises at least one of a graphic object, a graphic effect, an outline, a highlight, text, an icon, or an image.

3. The electronic device of claim 2, wherein the indicator is displayed at a location related to a thumbnail image or at least one AI object included in the at least one AI content.

4. The electronic device of claim 1, wherein the AI content corresponds to video content, and
wherein the instructions enable the electronic device to:
receive a second user input related to the thumbnail image through the display;
display, in response to the second user input, a plurality of frame thumbnail images comprising a plurality of frames of the AI content in the second area through the display; and
display the indicator on at least a portion of the plurality of frame thumbnail images.

5. The electronic device of claim 4, wherein the instructions enable the electronic device to display the indicator on a first frame thumbnail image comprising the at least one AI object, and
wherein the first frame thumbnail image is included in the plurality of frame thumbnail images.

6. The electronic device of claim 4, wherein the instructions enable the electronic device to:
display a playback bar for indicating a playback location of the AI content on the plurality of thumbnail images through the display; and
display the indicator at a location related to the playback bar.

7. The electronic device of claim 1, wherein the instructions enable the electronic device to:
display a graphic object related to an AI display setting on the display;
receive a second user input for the graphic object through the display; and
display the indicator on the basis of at least a portion of the second user input.

8. The electronic device of claim 1, wherein the instructions enable the electronic device to:
receive a third user input for displaying at least some information of metadata related to the AI content; and
display, in response to the third user input, at least a portion of the metadata at a location adjacent to the thumbnail image.

9. The electronic device of claim 8, wherein the at least a portion of the metadata comprises information of at least one of an AI engine for generating the at least one AI object, at least one AI location within the AI content, or a text prompt for commanding to generate the at least one AI object.

10. The electronic device of claim 1, wherein the instructions enable the electronic device to, in a case where an entire portion of the AI content corresponds to AI content, display a second indicator different from a first indicator for indicating that the AI content partially comprises at least one AI object.

11. The electronic device of claim 1, further comprising:
a sensor configured to detect a folded state of the electronic device,
wherein the instructions enable the electronic device to:
display a portion of the AI content in the first area through the display, on the basis of it being determined through the sensor that at least a portion of the electronic device is in a folded state;
display the thumbnail image in the second area; and
display additional information between the portion of the AI content and the thumbnail image through the display.

12. The electronic device of claim 11, wherein the additional information comprises at least one of a portion of metadata related to the AI content and a reduced image in which another indicator for the AI content is included.

13. A content display method for an electronic device, comprising:
receiving a user input for displaying AI content comprising at least one artificial intelligence (AI) object;
displaying, on the basis of the user input, the AI content in a first area of a display, and displaying thumbnail images corresponding to the AI content in a second area of the display; and
displaying an indicator for indicating the at least one AI object on at least one thumbnail image displayed in the second area.

14. The method of claim 13, wherein the displaying of the AI indicator further comprises generating the indicator corresponding to the at least one AI object on the basis of at least a portion of metadata related to the AI content, and
wherein the indicator comprises at least one of a graphic object, a graphic effect, an outline, a highlight, text, an icon, or an image.

15. A computer-readable recording medium in which a program for executing a content display method for an electronic device on a computer is recorded,
wherein the content display method comprises:
receiving a user input for displaying AI content comprising at least one artificial intelligence (AI) object;
displaying, on the basis of the user input, the AI content in a first area of a display, and displaying thumbnail images corresponding to the AI content in a second area of the display; and
displaying an indicator for indicating the at least one AI object on at least one thumbnail image displayed in the second area.
